# FASCICULE DE BREVET EUROPEEN

(11) **EP 4 045 833 B1**
(45) Date de publication et mention de la délivrance du brevet: **07.01.2026**
(21) Numéro de dépôt: 20799785.9
(22) Date de dépôt: 15.10.2020
(51) Int. Cl.: F16L 37/098

(54) **DISPOSITIF DE RACCORDEMENT DE CONDUIT**
KANALVERBINDUNGSVORRICHTUNG
DUCT-CONNECTING DEVICE

(30) Priorité: 28.10.2019 FR 1912045
(43) Date de publication de la demande: 24.08.2022
(73) Titulaire: Purflux Filtration, 78280 Guyancourt (FR)
(72) Inventeur: LE MOUELLIC, Bruno, 44470 CARQUEFOU (FR)
(74) Mandataire: Plasseraud IP
(86) Numéro de dépôt international: PCT/FR2020/051848
(87) Numéro de publication internationale: WO 2021/084183

(56) Documents cités:
- WO-A1-2017/194850
- US-A1- 2015 145 243

## Description

L'invention relève du domaine des dispositifs de connexion fluidique pour des conduits notamment des conduits d'admission d'air pour véhicules automobiles.

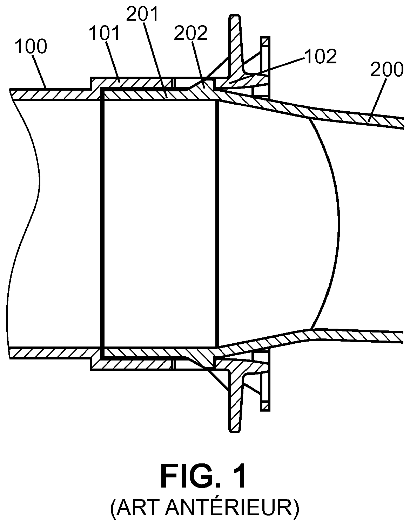

Il est connu de réaliser des dispositifs de connexion fluidique selon la figure 1 pour lesquels un embout mâle 200 d'un conduit fluidique est reçu dans un embout femelle 201 d'un raccord ou conduit fluidique, le dispositif de connexion comportant une terminaison mâle 201 de l'embout mâle reçue dans une terminaison femelle 101 de l'embout femelle et un dispositif de verrouillage à languette ressort 102 et pion 202 pour lequel la languette ressort est disposée à une extrémité distale de la terminaison femelle et le pion disposé en retrait de la terminaison mâle de l'embout mâle.

Dans cette solution connue le dispositif de verrouillage prolonge la zone de raccordement, ce qui rallonge la connexion. Le document WO 2017/194850 A1 décrit par ailleurs l'utilisation d'une languette ressort prévue à une extrémité distale de l'un des embouts, en requérant en outre une bague périphérique pour permettre le verrouillage entre les deux embouts. Cette solution rend l'assemblage plus complexe.

Au vu de l'art antérieur, la présente demande propose un dispositif de connexion fluidique plus compact et pour lequel la zone de raccordement est dissociée de la zone de verrouillage et est protégée.

Plus précisément, la présente demande propose un dispositif de connexion fluidique, par raccordement entre un premier embout d'un premier élément de tubulure ou d'un premier équipement tel qu'un dispositif de filtration et un second embout d'un second élément de tubulure ou d'un second équipement, le dispositif comprenant le premier embout et le second embout, pour lequel le premier embout constitue un embout femelle qui comporte une première terminaison tubulaire dont la face externe porte au moins un ergot ou pion de verrouillage et dont la face interne est lisse, pour lequel le second embout constitue un embout mâle qui comporte une seconde terminaison tubulaire formant avec la première terminaison tubulaire une partie d'accouplement et dont la face externe est une face lisse destinée à réaliser avec la face interne lisse de la première terminaison tubulaire une liaison étanche pour la connexion, le second embout comportant en outre :
- une jupe destinée à entourer au moins partiellement ladite partie d'accouplement ; et,
- une languette ressort munie d'un logement de réception dudit pion pour le verrouillage ensemble des premier et second embouts,
et pour lequel ladite jupe est raccordée à une partie arrière de la seconde terminaison tubulaire par une couronne annulaire formant, entre la seconde terminaison tubulaire et ladite jupe, une butée d'introduction de la première terminaison tubulaire.

Cette configuration de dispositif de raccordement protège la zone de raccordement notamment pour réaliser une connexion étanche et permet de raccourcir les embouts de connexion. De plus, le dispositif de connexion de l'invention, bien que raccourci, a l'avantage de ne pas nécessiter de joint tel qu'un joint torique. Le nombre de pièces peut être minimisé.

Les caractéristiques exposées dans les paragraphes suivants peuvent, optionnellement, être mises en œuvre. Elles peuvent être mises en œuvre indépendamment les unes des autres ou en combinaison les unes avec les autres :

La jupe peut être au moins en partie interrompue au niveau de la languette ressort.

La languette ressort peut comporter deux bras solidaires à une première de leurs extrémités de la couronne annulaire et reliés à une seconde de leurs extrémités par une plaquette pourvue d'une paroi d'encliquetage avec le pion de verrouillage, ledit logement étant délimité par la couronne annulaire, les bras et ladite paroi d'encliquetage.

La plaquette peut porter un poussoir de manœuvre.

La jupe peut porter un arceau formant un pontet de protection de la languette ressort et du poussoir de manœuvre.

La face externe de la première terminaison tubulaire peut porter au niveau de la partie d'accouplement au moins une nervure axiale de détrompage angulaire, destinée à coopérer avec une rainure axiale complémentaire réalisée au niveau de la jupe et formant une avancée de ladite jupe vers l'extrémité libre du second embout, de sorte que la nervure axiale engage la rainure axiale dès le début de l'accouplement des terminaisons des embouts.

Avantageusement, le premier embout et le second embout sont chacun réalisés d'une seule pièce.

La présente demande concerne en outre un raccord entre une première tubulure ou un équipement d'une part, et une seconde tubulure d'autre part, comprenant :
- l'embout mâle formé par le second embout du dispositif de connexion tel que décrit précédemment, ledit second embout étant formé en tant que première extrémité du raccord pour réaliser la connexion avec la première tubulure ou l'équipement, et pour lequel ladite première tubulure ou équipement comporte l'embout femelle formé par le premier embout dudit dispositif de connexion.

Selon un premier mode de réalisation, le raccord peut comprendre une seconde extrémité, de préférence opposée à la première extrémité, la seconde extrémité comportant un dispositif de connexion, pour la connexion sur une seconde tubulure ou équipement, de genre inversé au dispositif de connexion de la présente demande. Le raccord est tel que la seconde extrémité du raccord comporte une terminaison de raccordement femelle prolongée à son extrémité libre par une première partie de rétention et de détrompage tandis que ladite seconde tubulure comporte un embout mâle d'insertion pourvu d'une seconde partie de rétention et de détrompage, complémentaire de ladite première partie de rétention et de détrompage, se prolongeant vers l'extrémité de l'embout mâle d'insertion par une terminaison de raccordement mâle.
Bien entendu, l'expression « de genre inversé », pour le dispositif de connexion obtenu du côté de la seconde extrémité du raccord, signifie simplement que cette seconde extrémité reçoit un embout similaire ou identique à celui reçu par la première extrémité : il y a bien une orientation inversée par rapport à la première extrémité. Le raccord présente ainsi une languette ressort à chaque extrémité. Ceci peut éventuellement permettre de disposer le raccord indifféremment dans un sens ou un autre, afin de réaliser deux dispositifs de connexion avec le même raccord.

Le raccord peut dans ce cas être un raccord mâle-femelle.

Le raccord peut être pourvu à ses deux extrémités de moyens d'encliquetage à languette ressort destinés à coopérer avec des butées d'encliquetage disposées sur une face externe de terminaisons de raccordement tubulaires de tubulures ou d'équipements.

Le raccord peut être pourvu à ses deux extrémités d'au moins une rainure de détrompage interne destinée à coopérer avec au moins une nervure externe de détrompage correspondante d'une terminaison de raccordement tubulaire d'une tubulure ou d'un d'équipement.

Selon un second mode de réalisation, une seconde extrémité du raccord comporte un embout à terminaison mâle d'un dispositif de connexion selon la présente demande, ladite seconde tubulure ou équipement comporte un embout à terminaison femelle dudit dispositif de connexion selon la présente demande, le raccord constituant un raccord mâle-mâle pourvu d'une jupe de protection à chacune de ses extrémités.

Le raccord peut être réalisé d'une seule pièce.

Le raccord peut comprendre une partie coudée (coude) située entre deux extrémités opposées du raccord.

Chacune des deux extrémités du raccord peut être cylindrique et s'étendre jusqu'à une ligne de jonction annulaire avec la partie coudée.

Chacune des deux extrémités cylindriques du raccord peut présenter une longueur de cylindre inférieure à un diamètre interne délimitée par la première extrémité.

L'invention et les variantes de celle-ci peuvent permettre, de manière générale, de raccourcir les embouts de connexion des équipements, de standardiser la réalisation des embouts de tubulures ou d'équipements, de réaliser des raccords coudés simples à mettre en place et pourvus des pattes ressort d'encliquetage.

### Brève description des dessins

D'autres caractéristiques, détails et avantages de l'invention apparaîtront à la lecture de la description détaillée ci-après, et à l'analyse des dessins annexés, sur lesquels :
- la figure 1 montre un dispositif de connexion de l'art antérieur en coupe;
- la figure 2 montre un dispositif de connexion de la demande en perspective coupe;
- la figure 3 montre une partie mâle du dispositif de connexion de la demande en perspective trois quart face ;
- la figure 4 montre une vue en perspective d'un raccord selon un aspect de la demande, d'un équipement et d'une tubulure.

### Description de modes de réalisation

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

Le dispositif de l'invention s'applique particulièrement à des systèmes de filtration d'air pour des véhicules automobiles.

Comme vu plus haut le dispositif de connexion fluidique de l'art antérieur, visible sur la figure 1, comporte une portion de raccordement et une portion de verrouillage qui se suivent, la portion de verrouillage étant en arrière de la portion de raccordement.

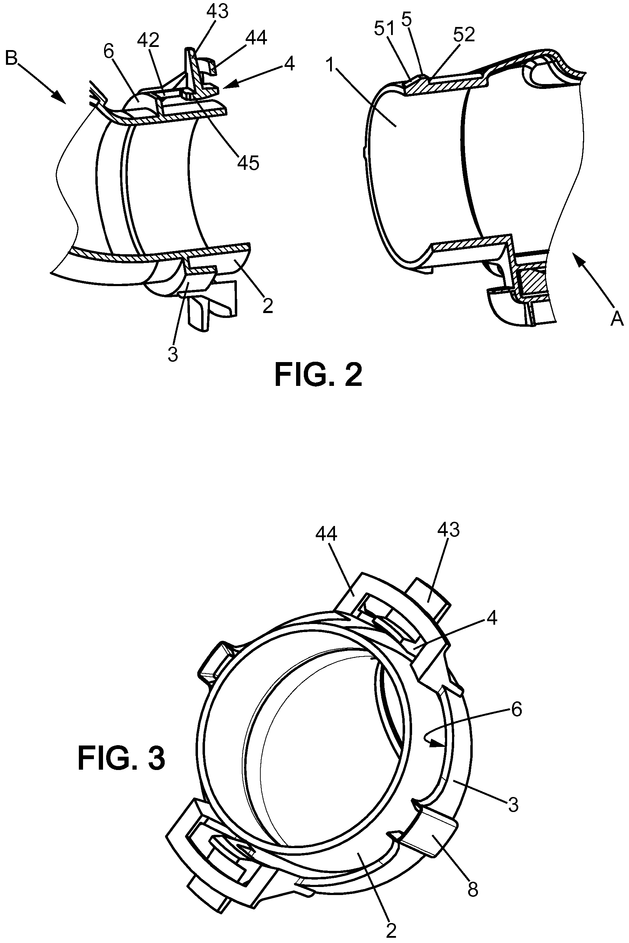

L'invention de la présente demande porte sur un dispositif de connexion fluidique de type connecteur rapide entre une portion de conduit portant un embout mâle 2 et une portion de conduit portant un embout femelle 1 représentés en figure 2. Le verrouillage des deux portions l'une dans l'autre s'obtient par l'engagement de pattes de retenue, réalisées sous forme de languettes ressort 4 du conduit portant l'embout mâle, sur des parois arrières 52 de pions 5 du conduit portant l'embout femelle. Une retenue axiale est obtenue ainsi, en pouvant typiquement placer le pion 5 dans un tronçon avant adjacent à un bord frontal/d'attaque de l'embout femelle 1.

La languette ressort 4 comporte un logement de réception du pion 5. Ce logement est par exemple délimité par la couronne annulaire 6, par deux bras 42 solidaires à une première de leurs extrémités de la couronne annulaire 6 et reliés à une seconde de leurs extrémités et par une plaquette 45 pourvue d'une paroi d'encliquetage avec le pion de verrouillage 5.

Une partie d'accouplement (ici cylindrique) définissant une zone de contact annulaire est formée par recouvrement de portions de portée cylindrique distribuées entre l'embout femelle 1 et l'embout mâle 2. La retenue axiale des deux portions de conduits est obtenue par la butée de l'extrémité de l'embout femelle 1 contre la paroi ou couronne annulaire 6 et l'engagement de la paroi/extrémité d'encliquetage portée par la plaquette 45 des languettes ressort 4 contre la paroi arrière 52 formant butée de verrouillage du pion 5. Le pion 5 comporte en outre une rampe 51 permettant la montée de la languette ressort 4 sur le pion 5 lors de l'accouplement des embouts. Préférablement le dispositif comporte deux dispositifs de verrouillage disposés à 180° l'un de l'autre. Les languettes ressort 4 des pattes de retenue sont suffisamment flexibles pour ne pas engendrer de casse lors d'utilisations répétées.

La plaquette 45 porte un poussoir de manœuvre 43 qui permet de désengager la plaquette du pion. Bien que chaque languette ressort 4 est ici illustrée comme actionnable par un poussoir de manœuvre 43 prévu sur l'embout mâle 2 et actionnable par une poussée longitudinale sensiblement parallèle à l'axe central de l'embout femelle 1 (axe qui permet de définir une direction d'insertion de l'embout mâle 2), d'autres modes d'actionnement peuvent être prévus. Eventuellement, l'actionnement pourrait être permis en appuyant sur ou en sollicitant une portion d'actionnement élastiquement déformable qui est solidaire de l'embout femelle 1.

Selon l'invention, le dispositif de connexion fluidique comporte une jupe externe 3 destinée à entourer au moins partiellement la partie d'accouplement. Cette jupe externe 3, plus particulièrement représentée en figure 3, encadre les languettes ressort 4 des pattes de retenue qui l'interrompent et comporte en outre un arceau 44 formant un pontet de protection de la languette ressort 4 et du poussoir de manœuvre 43.

La jupe externe 3 porte en outre des rainures 8 de réception de nervures 7 de détrompage portées par l'embout femelle 1. Selon l'exemple représenté, les rainures 8 qui sont portées intérieurement par la jupe 3 sont au nombre de deux et disposées à 180° l'une de l'autre. Chaque rainure 8 communique directement avec l'espace annulaire de réception d'une extrémité d'embout femelle portant les nervures 7 (extrémité prise alors en sandwich entre le tronçon d'insertion d'embout mâle et la jupe 3).

Pour permettre au détrompage de s'effectuer dès le début de l'accouplement, la jupe 3 comporte des prolongements vers l'avant de la partie d'accouplement qui portent les rainures 8.

La ou les rainures 8, réalisées dans une avancée ou un prolongement de la jupe 3 vers l'extrémité libre de l'embout mâle 2, sont configurées pour permettre d'avoir un engagement de la ou des nervures axiales 7, qui débutent à l'extrémité d'accouplement de l'embout femelle 1, dès le début de l'accouplement des terminaisons de raccordement du dispositif de connexion.

La jupe externe 3 forme un espace annulaire de réception fermé à l'une de ses extrémités pour la réception d'une terminaison tubulaire formant ici la partie de connexion femelle (embout femelle 1). Cet espace annulaire est intérieurement délimité par un tronçon de tube formant la face interne pour le passage du fluide. Le tronçon de tube est une partie d'insertion pour l'insertion dans l'embout femelle 1, qui s'étend entre un bord annulaire libre et région annulaire où se raccorde la couronne 6, par l'extérieur. Ce tronçon est ainsi rigidifié par l'extérieur au niveau de la connexion/jonction périphérique avec la couronne 6. La face interne du tronçon d'insertion peut être lisse, sans aspérité et/ou sans épaulement intérieur. Plus généralement, la face interne prévue dans la portion de conduit incluant l'embout mâle 2 peut être conservée lisse sur une distance supérieure à l'extension longitudinale du tronçon d'insertion (donc à la fois au niveau du tronçon d'insertion et dans un tronçon qui suit). Comme il sera décrit plus loin, l'embout mâle 2 peut faire partie d'un raccord à deux extrémités de connexion, éventuellement sous la forme d'un raccord coudé. L'absence d'aspérité ou élément de rigidification sur la face interne du côté de l'embout mâle 2 à jupe externe 3 (embout mâle 2 qui est typiquement plus complexe que l'embout femelle 1) peut alors permettre si besoin d'allonger la longueur effective d'étanchéité réalisée dans la partie d'accouplement. La partie d'accouplement peut être constituée par le tronçon d'insertion de l'embout mâle 2 et la portion d'extrémité correspondante de l'embout femelle 1, qui se chevauchent à l'état accouplé.

Les pièces du dispositif de connexion fluidique sont des pièces plastiques et selon la présente demande, l'étanchéité plastique/plastique sur la paroi interne de la partie mâle 1 et la paroi externe de la partie femelle 2 se fait sur des parois lisses dépourvues de joints. L'étanchéité obtenue dans le cadre d'une application de l'invention à des circuits d'air est une étanchéité compatible d'un circuit d'admission d'air moteur ou d'un circuit d'air habitacle de véhicule.

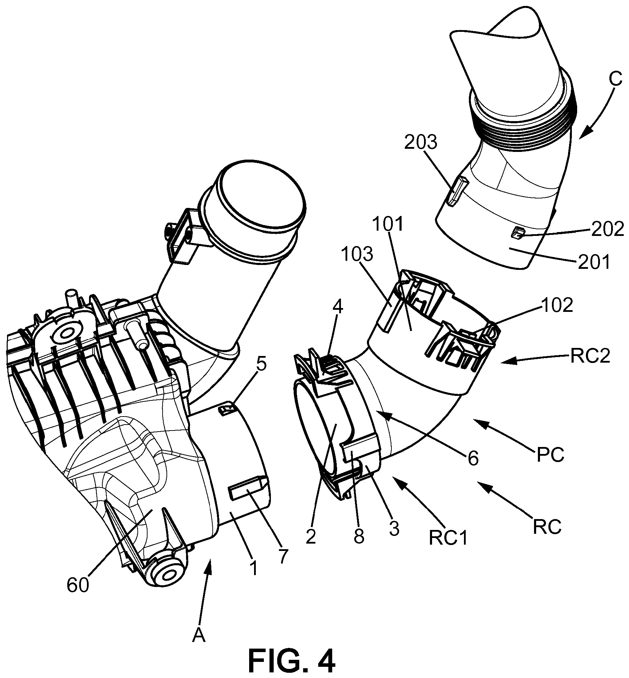

Comme vu plus haut la partie d'accouplement est séparée de la zone de verrouillage du fait que le dispositif d'encliquetage/verrouillage est localisé sur la jupe externe 3. Ceci permet des formes de réalisation particulièrement compactes. Ainsi, le ratio entre la longueur d'étanchéité effective obtenue dans cette partie d'accouplement et la longueur totale du chevauchement peut être supérieur à 80 :100, de préférence supérieur ou égal à 89 :100. Par exemple dans le cas de la figure 4, l'embout femelle 1 peut représenter une portée d'étanchéité ayant une longueur de l'ordre de 30 ou 35 mm, sans que l'embout mâle 2 correspondant ne soit nécessairement d'une longueur significativement plus longue. Il n'y a aucun joint rapporté (pas de joint technique), ce qui évite une opération d'assemblage. La portée est sensiblement cylindrique dans les exemples non limitatifs illustrés. Ce type de chevauchement entre la partie d'accouplement et la zone de verrouillage peut avantageusement contribuer à améliorer la compacité, sachant que le ratio susmentionné n'excède généralement pas 40 :100 avec un agencement du genre montré en figure 1, l'un des embouts (portant les pattes d'actionnement dans l'exemple de la figure 1) étant bien plus long que la portée utile pour réaliser l'étanchéité.

L'invention permet notamment de réaliser des raccords RC entre deux tubulures ou une tubulure et un équipement. La figure 4 représente un raccord RC dont une première partie se raccorde sur un équipement 60, par exemple un filtre à air, pourvu d'une terminaison de raccordement A et dont une seconde partie se raccorde sur une conduite C. L'invention peut s'appliquer au cas où l'équipement 60 est remplacé par une conduite, de même qu'au cas où la conduite C est remplacée par un équipement.

Une première extrémité RC1 du raccord comporte l'embout mâle 2 d'un dispositif de connexion de l'invention tandis que la terminaison A de ladite première tubulure ou équipement 60 comporte l'embout femelle 1 dudit dispositif de connexion de l'invention.

Par contre, dans cet exemple de réalisation, la seconde extrémité RC2 du raccord RC comporte un dispositif de connexion, sur une seconde tubulure ou équipement C, de genre inversé au dispositif de connexion de l'invention c'est-à-dire que la seconde extrémité du raccord comporte une terminaison de raccordement ou embout femelle 101 prolongée à son extrémité libre par une première partie de rétention 102 et de détrompage 103 tandis que ladite seconde tubulure C comporte un embout mâle dit embout mâle d'insertion pourvu d'une seconde partie de rétention 202 et de détrompage 203, complémentaire de ladite première partie de rétention et de détrompage, qui est suivie vers l'extrémité de l'embout mâle d'insertion par une terminaison de raccordement mâle 201 (ici avec le type de pions 5 similaires à ceux décrits en référence à la figure 2).

Plus généralement, cette seconde extrémité RC2 du raccord RC permet ainsi de connecter le raccord RC à un autre type d'embout, par exemple un embout tel qu'illustré sur la figure 1.

Ce raccord RC constitue dans ce cas un raccord mâle-femelle pourvu à ses deux extrémités de moyens d'encliquetage à languette ressort 4 destinés à coopérer avec des butées d'encliquetage, ici sous forme de pions 5, disposées sur une face externe de terminaisons de raccordement tubulaires de tubulures ou d'équipements. De même, ce raccord mâle-femelle est pourvu à ses deux extrémités de rainures de détrompage internes 8, 103 destinées à coopérer avec des nervures de détrompage externes 7, 203 d'une terminaison de raccordement tubulaire d'une tubulure ou d'un d'équipement.

En fonction de l'implantation du circuit fluidique, les moyens de détrompage et les moyens d'encliquetage peuvent avoir des positionnements angulaires différents entre la première extrémité et la seconde extrémité du raccord.

Le raccord RC peut être réalisé d'une seule pièce. Il comprend, ici comme illustré sur la figure 4, une partie coudée PC située entre deux extrémités opposées du raccord RC. Il peut être prévu que chacune des deux extrémités, qui sont ici cylindriques, s'étende (avec sensiblement la même section cylindrique par exemple) jusqu'à une ligne de jonction annulaire respective avec la partie coudée PC. Pour un gain de compacité, chacune des deux extrémités de forme cylindrique peut présenter une longueur de cylindre, mesurée jusqu'à la ligne de jonction avec la partie coudée, qui est inférieure à un diamètre interne délimitée par la première extrémité.

Le raccord RC représenté est un raccord coudé à partie coudée PC mais peut être aussi un raccord droit si nécessaire.

Une réalisation alternative, est que la première et la seconde extrémité du raccord soient toutes deux pourvues de l'embout mâle du dispositif de raccordement de la demande, le raccord constituant un raccord mâle-mâle pourvu d'une jupe 3 de protection à chacune de ses extrémités. Dans ce cas l'embout de la conduite C sera aussi identique à l'embout A de la figure 2, Le dispositif de connexion du raccord et des conduites ou équipements étant alors identique à celle de la figure 2 des deux côtés du raccord. Une telle réalisation permet de raccourcir les embouts portés par les conduites et les équipements des deux côtés du raccord RC.

Sur la figure 4, l'équipement 60 est par exemple un filtre à air, optionnellement pour moteur à combustion thermique et l'embout femelle 1, formée directement sur un boîtier, peut permettre de réaliser une étanchéité sur une longueur supérieure à 20 ou 25 mm, sans que la tubulure portant l'embout femelle 1 soit en saillie de plus de 30 ou 35 mm par rapport au reste du boîtier de l'équipement 60. Ici l'embout femelle est en saillie suivant une direction parallèle à une longueur du boîtier et/ou à un plan d'un cadre de support d'un élément filtrant de filtration d'air monté dans le boîtier. Le flux d'air filtré s'écoule perpendiculairement à ce plan pour passer d'une entrée à une sortie du filtre à air. L'embout femelle 1 forme la partie extérieurement saillante de l'une parmi l'entrée et la sortie du filtre à air dans cet exemple non limitatif.

### Application industrielle

L'invention peut trouver à s'appliquer notamment au raccordement de conduits de distribution d'air entre eux, au raccordement d'un conduit d'admission d'air et d'un boîtier de filtre à air moteur ou habitacle d'un véhicule automobile ou d'un système de climatisation.

L'invention ne se limite pas aux exemples décrits ci-avant, seulement à titre d'exemple, mais elle englobe toutes les variantes que pourra envisager l'homme de l'art dans le cadre de la protection recherchée.

## Revendications

1. Dispositif de connexion fluidique, par raccordement entre un premier embout (A) d'un premier élément de tubulure ou d'un premier équipement tel qu'un dispositif de filtration et un second embout (B) d'un second élément de tubulure ou d'un second équipement, le dispositif comprenant le premier embout (A) et le second embout (B), **caractérisé en ce que** le premier embout (A) constitue un embout femelle qui comporte une première terminaison tubulaire (1) dont la face externe porte au moins un ergot ou pion de verrouillage (5) et dont la face interne est lisse, **en ce que** le second embout (B) constitue un embout mâle qui comporte une seconde terminaison tubulaire (2) formant avec la première terminaison tubulaire (1) une partie d'accouplement et dont la face externe est une face lisse destinée à réaliser avec la face interne lisse de la première terminaison tubulaire une liaison étanche pour la connexion, ledit second embout (B) comportant en outre :
- une jupe (3) destinée à entourer au moins partiellement ladite partie d'accouplement ; et
- une languette ressort (4) munie d'un logement de réception dudit ergot pion (5) pour le verrouillage ensemble desdits premier et second embouts (A, B),
et **en ce que** ladite jupe (3) est raccordée à une partie arrière de la seconde terminaison tubulaire (2) par une couronne annulaire (6) formant, entre la seconde terminaison tubulaire (2) et ladite jupe (3), une butée d'introduction de la première terminaison tubulaire (1).

2. Dispositif de connexion fluidique selon la revendication 1, pour lequel la jupe (3) est au moins en partie interrompue au niveau de la languette ressort (4).

3. Dispositif de connexion fluidique selon la revendication 1 ou 2, pour lequel la languette ressort (4) comporte deux bras (42) solidaires à une première de leurs extrémités de la couronne annulaire (6) et reliés à une seconde de leurs extrémités par une plaquette (45) pourvue d'une paroi d'encliquetage avec l'ergot ou le pion de verrouillage (5), ledit logement étant délimité par la couronne annulaire (6), les bras et ladite paroi d'encliquetage.

4. Dispositif de connexion fluidique selon la revendication 3 pour lequel la plaquette (45) porte un poussoir de manœuvre (43) et pour lequel la jupe porte un arceau (44) formant un pontet de protection de la languette ressort (4) et du poussoir de manœuvre (43).

5. Dispositif de connexion fluidique selon l'une quelconque des revendications précédentes pour lequel la face externe de la première terminaison tubulaire (1) porte au niveau de la partie d'accouplement au moins une nervure axiale de détrompage angulaire (7), destinée à coopérer avec une rainure axiale complémentaire (8) réalisée au niveau de la jupe (3) et formant une avancée de ladite jupe vers l'extrémité libre du second embout, de sorte que la nervure axiale engage la rainure axiale dès le début de l'accouplement des terminaisons des embouts.

6. Dispositif de connexion fluidique selon l'une quelconque des revendications précédentes, dans lequel le premier embout (A) et le second embout (B) sont chacun réalisés d'une seule pièce.

7. Dispositif de connexion fluidique selon l'une quelconque des revendications précédentes, dans lequel l'embout femelle formé par le premier embout (A) dudit dispositif de connexion fluidique appartient à une première tubulure ou équipement (60), le dispositif comprenant un raccord (RC) entre cette première tubulure ou équipement (60) d'une part, et une seconde tubulure (C) d'autre part,
et dans lequel l'embout mâle formé par le second embout (B) fait partie du raccord (RC), ledit raccord (RC) comprenant :
- une première extrémité (RC1) formée par ledit second embout (B) pour réaliser la connexion avec la première tubulure ou l'équipement (60) sous forme d'une connexion avec ledit premier embout (A) ; et
- une seconde extrémité (RC2), opposée à la première extrémité (RC1).

8. Dispositif de connexion fluidique selon la revendication 7,
dans lequel le raccord (RC) est réalisé d'une seule pièce et comprend une partie coudée (PC) située entre la première extrémité (RC1) et la deuxième extrémité (RC2).

9. Dispositif de connexion fluidique selon la revendication 8, dans lequel chacune des deux extrémités (RC1, RC2) est cylindrique et s'étend jusqu'à une ligne de jonction annulaire avec la partie coudée (PC), chacune des deux extrémités cylindriques présentant une longueur de cylindre inférieure à un diamètre interne délimitée par la première extrémité (RC1).

10. Système comprenant le dispositif de connexion fluidique selon la revendication 7, 8 ou 9 ainsi que la seconde tubulure (C), dans lequel la seconde extrémité (RC2) du raccord (RC) comporte une terminaison de raccordement femelle permettant la connexion par insertion d'un embout mâle de la seconde tubulure (C), ,
et dans lequel ladite terminaison de raccordement femelle (101) est prolongée à son extrémité libre par une première partie de rétention et de détrompage (102, 103) tandis que l'embout mâle d'insertion prévu dans ladite seconde tubulure (C) est pourvu d'une seconde partie de rétention et de détrompage (202, 203), complémentaire de ladite première partie de rétention et de détrompage, se prolongeant vers l'extrémité de l'embout mâle d'insertion par une terminaison de raccordement mâle (201).

11. Système selon la revendication 10, dans lequel le raccord (RC) constitue un raccord mâle-femelle et est pourvu à ses deux extrémités de moyens d'encliquetage à languette ressort (102) destinés à coopérer avec des butées d'encliquetage (202) disposées sur une face externe de terminaisons de raccordement tubulaires des tubulures ou équipements (60, C).

12. Système selon la revendication 10 ou 11, dans lequel le raccord (RC) constitue un raccord mâle-femelle et est pourvu à ses deux extrémités d'au moins une rainure (103) de détrompage interne destinée à coopérer avec au moins une nervure externe complémentaire (203) de détrompage d'une terminaison de raccordement tubulaire d'une tubulure ou d'un d'équipement.

13. Ensemble à deux connexions fluidiques, comprenant un premier dispositif de connexion fluidique tel que défini selon l'une quelconque des revendications 1 à 6 et comprenant un deuxième dispositif de connexion fluidique tel que défini selon l'une quelconque des revendications 1 à 6, ledit ensemble comprenant un raccord (RC) entre une première tubulure ou un équipement (60) d'une part, et une seconde tubulure (C) d'autre part,
dans lequel les deux embouts mâles respectivement prévus dans le premier dispositif de connexion fluidique et dans le deuxième dispositif de connexion fluidique forment :
- pour l'un, une première extrémité (RC1) du raccord, qui est ainsi une extrémité formée par ledit second embout (B) du premier dispositif de connexion fluidique pour réaliser la connexion avec la première tubulure ou l'équipement (60), ladite première tubulure ou équipement (60) comportant l'embout femelle formé par le premier embout (A) dudit premier dispositif de connexion fluidique ;
- pour l'autre, une deuxième extrémité (RC2) du raccord, qui est ainsi une extrémité formée par ledit second embout (B) du deuxième dispositif de connexion fluidique pour réaliser la connexion avec la seconde tubulure (C), ladite seconde tubulure (C) comportant l'embout femelle formé par le premier embout (A) dudit deuxième dispositif de connexion fluidique ; le raccord (RC) constituant un raccord mâle-mâle pourvu d'une jupe (3) de protection à chacune de ses extrémités (RC1, RC2).

## Patentansprüche

1. Fluidverbindungsvorrichtung zum Verbinden eines ersten Endstücks (A) eines ersten Rohrelements oder einer ersten Ausrüstung, wie beispielsweise einer Filtervorrichtung, mit einem zweiten Endstück (B) eines zweiten Rohrelements oder einer zweiten Ausrüstung, wobei die Vorrichtung das erste Endstück (A) und das zweite Endstück (B) umfasst, **dadurch gekennzeichnet, dass** das erste Endstück (A) ein weibliches Endstück ist, das ein erstes rohrförmiges Ende (1) aufweist, dessen Außenseite wenigstens einen Verschlusszapfen oder -stift (5) trägt und dessen Innenseite glatt ist, dass das zweite Endstück (B) ein männliches Endstück ist, das ein zweites rohrförmiges Ende (2) aufweist, das mit dem ersten rohrförmigen Ende (1) einen Kopplungsabschnitt bildet und dessen Außenseite eine glatte Fläche ist, die dazu bestimmt ist, mit der glatten Innenseite des ersten rohrförmigen Endes eine dichte Verbindung für den Anschluss herzustellen, wobei das zweite Endstück (B) ferner umfasst:
- eine Schürze (3), die dazu bestimmt ist, den Kopplungsabschnitt wenigstens teilweise zu umgeben; und
- eine Federzunge (4), die mit einer Aufnahme für den genannten Verschlusszapfen oder -stift (5) versehen ist, um das erste und das zweite Endstück (A, B) zu verriegeln, und dass die Schürze (3) mit einem hinteren Abschnitt des zweiten rohrförmigen Endes (2) durch einen Ringkranz (6) verbunden ist, der zwischen dem zweiten rohrförmigen Ende (2) und der Schürze (3) einen Anschlag zum Einführen des ersten rohrförmigen Endes (1) bildet.

2. Fluidverbindungsvorrichtung nach Anspruch 1, wobei die Schürze (3) wenigstens teilweise auf Höhe der Federzunge (4) unterbrochen ist.

3. Fluidverbindungsvorrichtung nach Anspruch 1 oder 2, wobei die Federzunge (4) zwei Arme (42) aufweist, die an einem ersten ihrer Enden fest mit dem Ringkranz (6) verbunden sind und an einem zweiten ihrer Enden durch eine Platte (45) verbunden sind, die mit einer Rastwand mit dem Verschlusszapfen oder -stift (5) versehen ist, wobei das Gehäuse durch den Ringkranz (6) begrenzt ist. (45) verbunden sind, die mit einer Wand zum Einrasten mit dem Verschlusszapfen oder -stift (5) versehen ist, wobei die Aufnahme durch den Ringkranz (6), die Arme und die Rastwand begrenzt ist.

4. Fluidverbindungsvorrichtung nach Anspruch 3, wobei die Platte (45) einen Betätigungsdrücker (43) trägt und wobei die Schürze einen Bügel (44) trägt, der eine Schutzbrücke für die Federzunge (4) und den Betätigungsdrücker (43) bildet.

5. Fluidverbindungsvorrichtung nach einem der vorhergehenden Ansprüche, wobei die Außenfläche des ersten rohrförmigen Endes (1) im Bereich des Kopplungsabschnitts wenigstens eine axiale Rippe zum Winkelverschluss (7) aufweist, die dazu bestimmt ist, mit einer komplementären axialen Nut (8) zusammenzuwirken, die an der Schürze (3) ausgebildet ist und einen Vorsprung der Schürze zum freien Ende des zweiten Endstücks bildet, so dass die axiale Rippe in die axiale Nut eingreift, sobald die Enden der Endstücke miteinander gekoppelt werden.

6. Fluidverbindungsvorrichtung nach einem der vorhergehenden Ansprüche, wobei das erste Endstück (A) und das zweite Endstück (B) jeweils einteilig ausgebildet sind.

7. Fluidverbindungsvorrichtung nach einem der vorhergehenden Ansprüche, wobei das durch das erste Endstück (A) der Fluidverbindungsvorrichtung gebildete weibliche Endstück zu einem ersten Rohrelement oder einer ersten Ausrüstung (60) gehört, wobei die Vorrichtung eine Verbindung (RC) zwischen diesem ersten Rohrelement oder dieser ersten Ausrüstung (60) einerseits und einem zweiten Rohrelement (C) andererseits umfasst,
und wobei das durch das zweite Endstück (B) gebildete männliche Endstück Teil der Verbindung (RC) ist, wobei die Verbindung (RC) umfasst:
- ein erstes Ende (RC1), das durch das zweite Endstück (B) gebildet ist, um die Verbindung mit dem ersten Rohrelement oder der ersten Ausrüstung (60) in Form einer Verbindung mit dem ersten Endstück (A) herzustellen; und
- ein zweites Ende (RC2), das dem ersten Ende (RC1) gegenüberliegt.

8. Fluidverbindungsvorrichtung nach Anspruch 7, wobei die Verbindung (RC) einteilig ausgebildet ist und einen abgewinkelten Abschnitt (PC) aufweist, der zwischen dem ersten Ende (RC1) und dem zweiten Ende (RC2) angeordnet ist.

9. Fluidverbindungsvorrichtung nach Anspruch 8, wobei jedes der beiden Enden (RC1, RC2) zylindrisch ist und sich bis zu einer ringförmigen Verbindungslinie mit dem abgewinkelten Abschnitt (PC) erstreckt, wobei jedes der beiden zylindrischen Enden eine Zylinderlänge aufweist, die kleiner ist als ein Innendurchmesser, der durch das erste Ende (RC1) begrenzt ist.

10. System, umfassend die Fluidverbindungsvorrichtung nach Anspruch 7, 8 oder 9 sowie das zweite Rohrelement (C), wobei das zweite Ende (RC2) der Verbindung (RC) ein weibliches Anschlussende aufweist, das den Anschluss durch Einstecken eines männlichen Endstücks des zweiten Rohrelements (C) ermöglicht,
und wobei das weibliche Anschlussende (101) an seinem freien Ende durch einen ersten Halte- und Verschlussabschnitt (102, 103) verlängert ist, während das in dem zweiten Rohrelement (C) vorgesehene männliche Einsteckende mit einem zweiten Halte- und Verschlussabschnitt (202, 203) versehen ist, der zu dem ersten Halte- und Verschlussabschnitt komplementär ist und sich zum Ende des männlichen Einsteckendes hin durch ein männlichen Anschlussende (201) fortsetzt.

11. System nach Anspruch 10, wobei die Verbindung (RC) eine Steckverbindung bildet und an beiden Enden mit Rastmitteln mit Federzunge (102) versehen ist, die dazu bestimmt sind, mit Rastanschlägen (202) zusammenwirken, die an einer Außenseite von rohrförmigen Anschlussenden der Rohrelemente oder Ausrüstungen (60, C) angeordnet sind.

12. System nach Anspruch 10 oder 11, wobei die Verbindung (RC) eine Steckverbindung darstellt und an beiden Enden mit wenigstens einer inneren Verschlussnut (103) versehen ist, die dazu bestimmt ist, mit wenigstens einer komplementären äußeren Verschlussrippe (203) einer rohrförmigen Anschlussverbindung eines Rohrelements oder einer Ausrüstung zusammenwirkt.

13. Anordnung mit zwei Fluidverbindungen, umfassend eine erste Fluidverbindungsvorrichtung, wie sie in einem der Ansprüche 1 bis 6 definiert ist, und eine zweite Fluidverbindungsvorrichtung, wie sie in einem der Ansprüche 1 bis 6 definiert ist, wobei die Anordnung eine Verbindung (RC) zwischen einem ersten Roherelement oder einer Ausrüstung (60) einerseits und einem zweiten Roherelement (C) andererseits umfasst,
wobei die beiden männlichen Endstücke, die jeweils in der ersten Fluidverbindungsvorrichtung und in der zweiten Fluidverbindungsvorrichtung vorgesehen sind, bilden:
- zum einen ein erstes Ende (RC1) der Verbindung, das somit ein Ende ist, das durch das zweite Endstück (B) der ersten Fluidverbindungsvorrichtung gebildet wird, um die Verbindung mit dem ersten Roherelement oder der ersten Ausrüstung (60) herzustellen, wobei das erste Rohrelement oder die erste Ausrüstung (60) das durch das erste Endstück (A) der ersten Fluidverbindungsvorrichtung gebildete weiblichen Endstück aufweist;
- zum anderen ein zweites Ende (RC2) der Verbindung, das somit ein Ende ist, das durch das zweite Endstück (B) der zweiten Fluidverbindungsvorrichtung gebildet wird, um die Verbindung mit dem zweiten Roherelement (C) herzustellen, wobei der zweite Roherelement (C) das durch das erste Endstück (A) der zweiten Fluidverbindungsvorrichtung gebildete weibliche Endstück aufweist;
wobei die Verbindung (RC) eine Steckverbindung mit einer Schürze (3) an jedem ihrer Enden (RC1, RC2) bildet.

## Claims

1. Fluidic connection device, by connection between a first end piece (A) of a first pipework element or of a first piece of equipment, such as a filtration device, and a second end piece (B) of a second pipework element or a of second piece of equipment, the device comprising both the first end piece (A) and the second end piece (B), **characterised in that** the first end piece (A) constitutes a female end piece that includes a first tubular termination (1) the external face of which carries at least one locking lug or pin (5) and the internal surface of which is smooth, **in that** the second end piece (B) constitutes a male end piece that includes a second tubular termination (2) forming, with the first tubular termination (1), a coupling part, and the external face of which is a smooth face designed to create, with the smooth internal face of the first tubular termination, an impervious bond for the connection, said second end piece (B) further including:
- a skirt (3) intended to at least partially surround said coupling part; and
- a spring tab (4) fitted with a housing for receiving said lug or pin (5) for locking said first and second end pieces (A, B) together,
and **in that** the said skirt (3) is connected to a rear part of the second tubular termination (2) by an annular ring (6) forming, between the second tubular termination (2) and the said skirt (3), a stop for introduction of the first tubular termination (1).

2. Fluidic connection device according to claim 1, wherein the skirt (3) is at least partially interrupted at the spring tab (4).

3. Fluidic connection device according to claim 1 or 2, wherein the spring tab (4) includes two arms (42) secured at a first of their ends to the annular ring (6) and connected at a second of their ends by a plate (45) provided with a wall for snapping onto the locking lug or pin (5), said housing being delimited by the annular ring (6), the arms and said snapping-on wall.

4. Fluidic connection device according to claim 3, wherein the plate (45) carries a manoeuvring pusher (43) and wherein the skirt carries an arch (44) forming a bridge protecting the spring tab (4) and the manoeuvring pusher (43).

5. Fluidic connection device according to any one of the preceding claims, wherein the external face of the first tubular termination (1) carries at least one axial angular alignment rib (7) at the coupling section, designed to cooperate with a complementary axial groove (8) formed in the skirt (3) and extending the skirt towards the free end of the second end piece, such that the axial rib engages the axial groove from the outset of the coupling of the end-piece terminations.

6. Fluidic connection device according to any one of the preceding claims, wherein the first end piece (A) and the second end piece (B) are each formed from a single piece.

7. Fluidic connection device according to any one of the preceding claims, wherein the female end piece formed by the first end piece (A) of said fluidic connection device belongs to first pipework or equipment (60), the device comprising a connector (RC) between this first pipework or equipment (60) on the one hand and second pipework (C) on the other hand,
and wherein the male end piece formed by the second end piece (B) is part of the connector (RC), said connector (RC) comprising:
- a first end (RC1) formed by said second end piece (B) to establish the connection with the first pipework or equipment (60) in the form of a connection with said first end piece (A); and
- a second end (RC2), opposite the first end (RC1).

8. Fluidic connection device according to claim 7,
wherein the connector (RC) is made of a single piece and comprises a bent part (PC) located between the first end (RC1) and the second end (RC2).

9. Fluidic connection device according to claim 8, wherein each of the two ends (RC1, RC2) is cylindrical and extends to an annular junction line with the bent part (PC), each of the two cylindrical ends having a cylinder length that is less than an inside diameter delimited by the first end (RC1).

10. System comprising the fluidic connection device according to claim 7, 8 or 9 as well as the second pipework (C), wherein the second end (RC2) of the connector (RC) includes a female connection termination allowing the connection by insertion of a male end piece of the second pipework (C),
and wherein said female connection termination (101) is extended at its free end by a first retention and foolproof part (102, 103) while the male insertion end piece provided in said second pipe work (C) is provided with a second retention and foolproof part (202, 203), complementary to said first retention and foolproof part, extending toward the end of the male insertion end by a male connection termination (201).

11. System according to claim 10, wherein the connector (RC) is a male-female connector and is equipped at both ends with spring-tongue snapping-on means (102) designed to cooperate with snapping-on stops (202) located on the external face of the tubular connection terminations of the pipework or equipment (60, C).

12. System according to claim 10 or 11, wherein the connector (RC) constitutes a male-female connector and is provided at both ends thereof with at least one internal alignment groove (103) intended to cooperate with at least one complementary external alignment rib (203) for a tubular connection termination of pipework or equipment.

13. Assembly with two fluidic connections, comprising a first fluidic connection device as defined in any one of claims 1 to 6 and comprising a second fluidic connection device as defined in any one of claims 1 to 6, said assembly comprising a connector (RC) between first pipework or equipment (60) on the one hand and second pipework (C) on the other hand,
wherein the two male end pieces respectively provided in the first fluidic connection device and in the second fluidic connection device form:
- in one case, a first end (RC1) of the connector, which is thus an end formed by said second end piece (B) of the first fluidic connection device to establish the connection with the first pipework or equipment (60), said first pipework or equipment (60) including the female end piece formed by the first end piece (A) of said first fluidic connection device;
- in the other case, a second end (RC2) of the connector, which is thus an end formed by said second end piece (B) of the second fluidic connection device to establish the connection with the second pipework (C), said second pipework (C) including the female end piece formed by the first end piece (A) of said second fluidic connection device;
the connector (RC) constituting a male-male connector equipped with a protective skirt (3) at each of its ends (RC1, RC2).
